# EUROPEAN PATENT SPECIFICATION

(11) **EP 1 476 511 B1**
(45) Date of publication and mention of the grant of the patent: **12.03.2014**
(21) Application number: 03702354.6
(22) Date of filing: 14.01.2003
(51) Int. Cl.: C09D 5/34

(54) **COATING COMPOSITION**
BESCHICHTUNGSZUSAMMENSETZUNG
COMPOSITION DE REVETEMENT

(30) Priority: 15.01.2002 DK 200200059
(43) Date of publication of application: 17.11.2004
(73) Proprietor: VKR Holding A/S, 2970 Hørsholm (DK)
(72) Inventor: GRINVALDS, Carsten, Broennum, DK-2620 Albertslund (DK); JENSEN, Soeren, Soegaard, DK-1718 Copenhagen (DK); AGGERHOLM, Erik, Kjoelhede, DK-6971 Spjald (DK)
(74) Representative: Hauge, Sidsel
(86) International application number: PCT/DK2003/000020
(87) International publication number: WO 2003/060021

(56) References cited:
- WO-A-99/58591
- GB-A- 1 125 137
- US-A- 3 409 581
- US-A- 4 529 756
- US-A- 4 638 038
- US-A- 4 837 248
- US-A- 5 275 853
- 1998 , PHENOXY SPECIALTIES XP002240570 Product specification, PAPHEN Phenoxy Resins, Eastern Chemical Inc. the whole document
- DATABASE WPI Section Ch, Week 199848 Derwent Publications Ltd., London, GB; Class A21, AN 1998-563225 XP002240571 & JP 10 251377 A (HITACHI CHEM CO LTD), 22 September 1998 (1998-09-22)
- DATABASE WPI Section Ch, Week 199829 Derwent Publications Ltd., London, GB; Class A21, AN 1998-328523 XP002240572 & JP 10 120761 A (HITACHI CHEM CO LTD), 12 May 1998 (1998-05-12)
- DATABASE WPI Section Ch, Week 199517 Derwent Publications Ltd., London, GB; Class A28, AN 1995-128577 XP002240573 & JP 07 053880 A (DOW CORNING TORAY SILICONE), 28 February 1995 (1995-02-28)

## Description

The present invention relates to the use of at least one component selected from the group consisting of phenoxy resins and epoxy-based thermoplastics as an active component in a composition for coating and filling, in particular for coating and filling irregularities of a surface.

Coating and filling compositions are widely used, e.g. within the field of building and construction, where large amounts of coating and filling compositions are used as for example paint or putty for filling cavities and irregularities, drill holes, etc., in the building material before a final finish, such as wallpaper or decorative paint, is applied.

Generally, the compositions consist of particulate material suspended in a matrix of clay or rubber-like material, the material being of such a nature due to its contents of an amount of relatively volatile liquid. When the composition is applied to a surface, the volatile liquid will evaporate, causing the composition to harden on the surface.

In the known compositions, it may take several hours for the volatile liquid to evaporate. During this period, the coated surface cannot be further processed, e.g. sanding, while the composition has not hardened sufficiently.

Due to increased demand for reducing the time used for construction, there is a need for a composition for coating and filling hardening faster than the compositions known in the art, and having the effect that the coated surface is workable after a shorter period of time.

The object of the present invention is to provide use of at least one component selected from the group consisting of phenoxy resins and epoxy-based thermoplastics as an active component in a composition for coating and/or filling irregularities of a surface which can be further processed relatively shortly after the application on a surface.

This object is met by the invention as defined in the claims. The invention is based on the surprising finding that the time from the application of a coating composition until the time when the applied coating composition may be further processed is reduced by adding an active component to the coating composition. The inventors have found that by adding an active component from a group of related chemical compounds, viz. from the group of phenoxy resins and epoxy-based thermoplastics, also known as thermoplastic poly(hydroxyether) and thermoplastic polyetheramines (e.g. phenol,4,4'-(1-methylethylidene)bispolymer with (chloromethyl)oxirane and analogous compounds) the above-mentioned time may be reduced. Moreover, other properties of the coating composition appear to have improved as well, e.g. adherence and binding. In fact, the adherence of the coating composition to a surface has unexpected appeared to be significant improved compared to known coating compositions. Thereby a coating and/or filling composition with excellent properties has been provided.

Consequently, in a first embodiment, the invention relates to use of at least one component selected from the group consisting of phenoxy resins and epoxy-based thermoplastics as an active component in a composition for coating and/or, optionally, filling irregularities on the surface of a substrate, the composition comprising filler or filling material as well as subsidiary materials and at least one active component selected from the group of phenoxy resins and epoxy-based thermoplastics.

The coating composition according to the invention is a relatively viscous material, having the same properties as paint or putty when applied to the surface of the substrate. After application, the coating composition will harden due to evaporation of a volatile compound (e.g. solvent) and/or the hardening of a binding agent.

As a skilled person knows, the term substrate encompasses any material with a surface at which the coating composition according to the invention can be applied. Thus, the substrate may be wood, brick, tile, gypsum, gypsum board, cardboard, plywood, concrete, metal, fibreboard, and any other material used for construction within the building industry.

As mentioned above, the coating composition according to the invention includes at least one active component selected from the group consisting of phenoxy resins and epoxy-based thermoplastics. The addition of the active component provides a coating composition which may be further processed, e.g. with sandpaper, sooner than the known conventional coating compositions. Experiments conducted by the inventors have shown that the time from the application of the coating composition until it is ready for further processing may be reduced with at least 15-20%. The active components according to the invention may be similar or equal to those described in US Patent No. 5,275,853 (The Dow Chemical Company) and US Patent Nos. 4,335,122 and 4,638,038 (Union Carbide), marketed under the trademarks BLOX 200 series and PAPHEN Phenoxy Resins, respectively.

The active component (phenoxy resins or epoxy-based thermoplastics) is present in an amount of t 2-40% (w/w) based on the total weight of the composition. If the active component is present in an amount lower than about 1-2% (w/w), no substantial effect has been detected. If the composition is present in an amount above about 40% (w/w), the composition tends to loose its properties in respect of flowability and capacity for filling cavities and irregularities. Better properties are found when the active component is present in an amount of 4-33% (w/w). An even better performance may be obtained when the active component is present in an amount of 8-25% (w/w), and an optimum amount in respect of costs and properties tends to be in the range of 10-20 (w/w) or with about 12-16 (w/w) active component added.

According to the invention, the filler or filing material may be any material conventionally used as fillers in coating compositions, e.g. putty and paint. However, the filler should preferably be clay, talc, carbon, wood flour, zinc borate, bentonite, diatomaceous earth, calcium carbonate, mica, lignin, alumina, silica, mineral fibre, glass fibre and mixtures thereof. The filler may also be various metal or metal oxide powders, plastic or glass pellets as well as materials that may provide certain properties to the coating composition. Fillers of fibre material may improve the strength and flexibility, and mineral and glass fibre may improve the fire resistance. However, as it is intended to apply a large amount of the coating composition to building constructions, the price of the filler will be of major importance, when selecting the filler. The mean size of the filler particles does not exceed 300 µm, and preferably the mean size should be in the range between 10 to about 100 µm. If the particle size exceeds 300 µm, it becomes difficult to apply the coating composition to a surface. The best properties are found with a filler consisting of particles having a mean size in the range between 10 to about 100 µm. The amount of filler may be as high as 90 % (w/w) based on the total weight of the coating composition, preferably in the range about 20 to 80 % (w/w), more preferably in the range 30 to 70 % (w/w).

Like conventional coating compositions, the coating composition according to the invention comprises subsidiary material or additives, e.g. bind-ers, plasticizers, stabilizers, preservatives, oils, solvents, rheological aids, dyes and mixtures thereof.

The purpose of the binder is to form a matrix that will adhere the components of the composition to the surface or the substrate. Moreover, the binder must be compatible with the other components of the composition. Preferred types of binders are e.g. urethane, epoxy, acrylate, polyvinyl alcohol, polyvinyl acetate, polyvinyl acrylate and mixtures thereof. The binder is present in an amount up to 50% (w/w) based on the total weight of the composition, preferably between 5-40% (w/w), and more preferably between 10-20% (w/w). Normally, the optimum amount of binder is a balance between costs and the desired properties and may be determined by the skilled person as a matter of routine. Optionally the binder may be hardened by use of UV-light or heat.

Plasticizers may serve to provide satisfactory properties to coating composition during application and may be conventionally used plasticizers, e.g. based on fats, waxes and high-boiling esters like phtalates.

Optionally stabilizers may be added to maintain the properties of the coating composition during storage. Examples of such stabilizers are vinyl resins, carbon black to prevent photochemical degradation and ultraviolet absorbers, such as hydroxybenzo-phenones.

The coating composition according to the invention may also include preservatives, e.g. fungicides. Moreover, the coating composition may include antioxidants such as phenols, aromatic amines, salts, and condensation products of amines and aminophenols with aldehydes, ketones, and thio compounds to prevent or inhibit oxidation of the components comprised therein.

According to the invention, oils may be added, primarily in order to provide good rheological properties to the coating composition when applied on a surface. The oils are synthetic oils or mineral oils depending on the use and desired properties of the coating composition.

Furthermore, it is preferred to add solvents in order to provide good rheological properties of the coating composition according to the invention. After the composition has been applied to a surface the solvent will evaporate, causing the composition to stiffen and harden. Preferably, the solvent is selected among solvents, such as water, alcohols, like methanol, ethanol, propyl alcohol, isopropyl alcohol, glycerol etc., as well as aldehydes, ketones, turpentines, mineral spirits, e.g. white spirit, and mixtures thereof. The solvent may be present in an amount of 5-20 % (w/w) based on the total weight of the coating composition.

The rheological properties of the coating composition according to the invention can, if desired, be further improved with rheological aids like thickeners, surfactants, dispersants, foam inhibitors, and other conventional rheological aids.

The coating composition may also comprise dyes or pigments for the manufacturing of coloured coating compositions.

In one embodiment, the invention relates to the use of at least one component selected from the groupe consisting of phenoxy resins and epoxy-based thermoplastics as an active component in a coating composition comprising filler and optional additional additives. The filler is preferably clay, talc, carbon, wood flour, zinc borate, bentonite, diatomaceous earth, calcium carbonate, mica, lignin, alumina, silica, mineral fibre, glass fibre and mixtures thereof. Additional additives are preferably binders, plasticizers, stabilizers, preservatives, oils, solvents, dyes, and mixtures thereof. The fillers and additives are described in more detail in previous parts of this application.

Accordingly, the invention also relates to use where the active component selected from the group consisting of phenoxy resins and epoxy-based thermoplastics is present in an amount of 2-40% (w/w), preferably in an amount of 4-33% (w/w), more preferably in an amount of 8-25% (w/w) based on the total weight of the coating composition.

As is has been found that the active component selected from the group consisting of phenoxy resins and epoxy-based thermoplastics also improve the properties of commercially available products, especially in respect of reduced time from the application until further processing is possible, the invention also encompasses the use in which the coating composition comprising filler and optional additional additives is a commercially available conventional putty or paint.

Moreover, the invention also relates to the use of at least one component selected from the group consisting of phenoxy resins and epoxy-based thermoplastics as an active component in a commercially available putty or paint in order to improve the properties of the commercially available product.

A method is also disclosed for producing a coating composition comprising the steps of:
1) adding 2-40% (w/w) based on the total weight of the composition of at least one component selected from the group consisting of phenoxy resins and epoxy-based thermoplastics as an active component to a commercially available putty or paint;
2) mixing the active component and the commercially available putty or paint to a homogeneous mixture.
The method has been found to improve the properties of commercially available products. In particular the coating composition produced according to the method has the desired property of reduced time from the application of the coating composition onto a surface until further processing is possible.

The invention will now be further illustrated by means of an example.

### Example

Coating compositions according to the invention were tested in standard tests for putty towards conventional commercially available putty.

The conventional commercial available putty was "Flügger spartelmasse", a conventional putty available from the company Flügger, Denmark.

Coating compositions according to the invention were produced from "DANALIM spartelmasse", a putty base produced by the company Danalim, Denmark. To the putty base was added 6%, 12% and 33% active component. The active component was PAPHEN Phenoxy resin PKHS (phenol,4,4'-(1-methylethylidene)bispolymer with (chloromethyl)oxirane) available from the company Phenoxy Specialities. The results are listed in the table below

| | Flügger spartelmasse | 6% PAPHEN PKHS | 12% PAPHEN PKHS | 33% PAPHEN PKHS |
|---|---|---|---|---|
| | | | | |
| Finger dry approx. | 17 min | 15 min | 15 min | 15 min |
| Sanding dry approx. | 30 min | 25 min | 25 min | 25 min |
| Settling | V25.5% | V31.3% | V40.0% | V39.1% |
| | 29% | 32,5% | 42,6% | 38.5% |
| Sanding time/Hardness | 1/1 | 1, 1/1, 2 | 1, 2/1, 3 | 1,2/1,4 |
| Adherence | OK | OK | OK | OK |
| Adherence flow-coat | OK | OK | OK | OK |
| | Flügger spartelmasse | 6% PAPHEN PKHS | 12% PAPHEN PKHS | 33% PAPHEN PKHS |
| Blisterbox front (96h) | No change | No change | No change | No change |
| Blisterbox back (96h) | No change | No change | No change | No change |
| Observations | Putty feel off after testing during handling | Nothing to report | Nothing to report | Nothing to report |

| | | | | |
|---|---|---|---|---|
| Notes: Settling in %. Measured in a groove with width 25 mm and height 4 mm, which was filled with putty and the reduced height was measured. Flügger spartelmasse fell off as blocks. Sanding time/hardness. The numbers are proportional. Adherence measured with grid knife and tape. Blisterbox. Vessel containing water at 40°C. | | | | |

The example shows that the coating compositions according to the invention are sanding dry in a shorter time than conventional putty and at the same time posses good properties with regard to adherence and hardness. As seen in the table the adherence is significantly improved. The fact, that Flügger spartelmasse fell off as blocks during the settling test is assumed to be related to poorer adherence than for the coating compositions according to the invention.

## Claims

1. Use of at least one component selected from the group consisting of phenoxy resins and epoxy-based thermoplastics as an active component in a coating composition for coating and/or filling irregularities of a surface, said coating composition comprising filler and optional additional additives, for reducing the time for further processing of the surface when treated with the coating composition, wherein the active component constitutes 2-40% (w/w) based on the total weight of the coating composition, and the mean size of the filler particles does not exceed 300 µm.

2. Use according to claim 1, wherein the additional additive is selected from the group consisting of binders, plasticizers, stabilizers, preservatives, oils, solvents, rheological aids, dyes, and mixtures thereof.

3. Use according to claim 2, wherein the binder is selected from the group consisting of urethane, epoxy, acrylate, polyvinyl alcohol, polyvinyl acetate, polyvinyl acrylate and mixtures thereof.

4. Use according to claim 2 or 3, wherein the binder is present in an amount up to 50% w/w based on the total weight of the composition, preferably between 5-40% w/w.

5. Use according to claim 2, wherein the oils are selected from the group consisting of synthetic oils and mineral oils.

6. Use according claim 2, wherein the solvents are selected from the group consisting of water, alcohols, aldehydes, ketones, turpentines, mineral spirits and mixtures thereof

7. Use according to claims 1-6, wherein the filler is selected from the group consisting of clay, talc, zinc borate, bentonite, diatomaceous earth, wood flour, carbon, calcium carbonate, mica, lignin, alumina, silica, mineral fibre, glass fibre and mixtures thereof.

8. Use according to claim 1, wherein the coating composition comprising filler and optional additional additives is a commercially available conventional putty or paint.

## Patentansprüche

1. Verwendung mindestens einer Komponente ausgewählt aus der Gruppe bestehend aus Phenoxy-Harzen und Epoxy-basierten Thermoplasten als eine wirksame Komponente in einer Beschichtungszusammensetzung zum Beschichten und/oder Auffüllen von Unregelmäßigkeiten einer Oberfläche, wobei die Beschichtungszusammensetzung Füllstoff und optionale zusätzliche Additive enthält, zur Verringerung der Zeit zur weiteren Verarbeitung der Oberfläche, wenn diese mit der Beschichtungszusammensetzung behandelt wird, wobei die wirksame Komponente 2 bis 40% (w/w) auf Basis des Gesamtgewichts der Beschichtungszusammensetzung ausmacht und die mittlere Größe der Füllstoffpartikel 300 µm nicht übersteigt.

2. Verwendung nach Anspruch 1, bei der das zusätzliche Additiv aus der Gruppe bestehend aus Bindemitteln, Weichmachern, Stabilisatoren, Konservierungsmitteln, Ölen, Lösungsmitteln, rheologischen Hilfsmitteln, Färbemitteln und Mischungen davon ausgewählt ist.

3. Verwendung nach Anspruch 2, bei der das Bindemittel aus der Gruppe bestehend aus Urethan, Epoxy, Acrylat, Polyvinylalkohol, Polyvinylacetat, Polyvinylacrylat und Mischungen davon ausgewählt ist.

4. Verwendung nach Anspruch 2 oder 3, bei der das Bindemittel in einer Menge von bis zu 50% w/w auf Basis des Gesamtgewichts der Zusammensetzung, vorzugsweise zwischen 5 bis 40% w/w, vorhanden ist.

5. Verwendung nach Anspruch 2, bei der die Öle aus der Gruppe bestehend aus synthetischen Ölen und Mineralölen ausgewählt sind.

6. Verwendung nach Anspruch 2, bei der die Lösungsmittel aus der Gruppe bestehend aus Wasser, Alkoholen, Aldehyden, Ketonen, Terpentinen, Lösungsbenzin und Mischungen davon ausgewählt sind.

7. Verwendung nach Ansprüchen 1 bis 6, bei der der Füllstoff aus der Gruppe bestehend aus Ton, Talkum, Zinkborat, Bentonit, Diatomeenerde, Holzmehl, Kohlenstoff, Calciumcarbonat, Glimmer, Lignin, Aluminiumoxid, Siliciumoxid, Mineralfaser, Glasfaser und Mischungen davon ausgewählt ist.

8. Verwendung nach Anspruch 1, bei der die Beschichtungszusammensetzung, welche Füllstoff und optionale zusätzliche Additive enthält, eine kommerziell erhältliche konventionelle Paste oder Farbe ist.

## Revendications

1. Utilisation d'au moins un composant sélectionné à partir du groupe constitué de résines phénoxy et de matières thermoplastiques à base d'époxy en tant que composant actif dans une composition de revêtement destiné à recouvrir et/ou à remplir les irrégularités d'une surface, ladite composition de revêtement comprenant une charge de remplissage et des additifs facultatifs supplémentaires, en vue de réduire le temps de traitement supplémentaire de la surface lorsqu'elle est traitée avec la composition de revêtement, dans laquelle le composant actif constitue de 2 à 40% en poids (w/w) sur la base du poids total de la composition de revêtement, et dans laquelle la dimension moyenne des particules de la charge de remplissage ne dépasse pas 300µm.

2. Utilisation selon la revendication 1, dans laquelle l'additif supplémentaire est sélectionné à partir du groupe constitué de liants, de plastifiants, de stabilisants, de conservateurs, d'huiles, de solvants, d'adjuvants rhéologiques, de colorants et de leurs mélanges.

3. Utilisation selon la revendication 2, dans laquelle le liant est sélectionné à partir du groupe constitué d'uréthane, d'époxy, d'acrylate, d'alcool polyvinylique, d'acétate polyvinylique, d'acrylate polyvinylique et de leurs mélanges.

4. Utilisation selon la revendication 2 ou 3, dans laquelle le liant est présent dans une quantité allant jusqu'à 50% en poids (w/w) sur la base du poids total de la composition, de préférence, comprise entre 5 et 40% w/w.

5. Utilisation selon la revendication 2, dans laquelle les huiles sont sélectionnées à partir du groupe constitué d'huiles synthétiques et d'huiles minérales.

6. Utilisation selon la revendication 2, dans laquelle les solvants sont sélectionnés à partir du groupe constitué d'eau, d'alcools, d'aldéhydes, de cétones, de térébenthines, de white-spirit et de leurs mélanges.

7. Utilisation selon les revendications 1 à 6, dans laquelle la charge de remplissage est sélectionnée à partir du groupe constitué de talc, d'argile, de borate de zinc, de bentonite, de terre de diatomées, de farine de bois, de carbone, de carbonate de calcium, de mica, de lignine, d'alumine, de silice, de fibre minérale, de fibre de verre et de leurs mélanges.

8. Utilisation selon la revendication 1, dans laquelle la composition de revêtement comportant la charge de remplissage et les additifs facultatifs supplémentaires est un mastic plastique ou une peinture conventionne(le) disponible dans le commerce.
